(19) Europäisches Patentamt
European Patent Office
Office européen des brevets

(11) Veröffentlichungsnummer: **0 471 250 A1**

# (12) EUROPÄISCHE PATENTANMELDUNG

(21) Anmeldenummer: **91113018.5**

(51) Int. Cl.5: **C08C 19/02**

(22) Anmeldetag: **02.08.91**

(30) Priorität: **15.08.90 DE 4025781**

(43) Veröffentlichungstag der Anmeldung:
**19.02.92 Patentblatt 92/08**

(84) Benannte Vertragsstaaten:
**DE FR GB IT**

(71) Anmelder: **BAYER AG**

**W-5090 Leverkusen 1 Bayerwerk(DE)**

(72) Erfinder: **Buding, Hartmuth, Dr.**
**Liebermannstrasse 1**
**W-4047 Dormagen(DE)**
Erfinder: **Thörmer, Joachim, Dr.**
**Emil-Nolde-Strasse 39**
**W-5090 Leverkusen 1(DE)**
Erfinder: **Oppenheimer-Stix, Christiane, Dr.**
**Am Sporthafen 12**
**W-4040 Neuss(DE)**
Erfinder: **Leibbrandt, Friedrich, Dr.**
**Buscher Hof 46**
**W-5067 Kürten-Busch(DE)**

## (54) Hydrierte Butadien/Isopren/(Meth-)Acrylnitril-Copolymerisate.

(57) Selektiv hydrierte Butadien/Isopren/(Meth-)Acrylnitril-Copolymerisate besitzen verbesserte Druckverformungsreste bei niedriger Temperatur.

EP 0 471 250 A1

Die Erfindung betrifft selektiv hydrierte Butadien/Isopren/(Meth-)Acrylnitril-Copolymerisate, ein Verfahren zu ihrer Herstellung durch katalytische Hydrierung der Butadien/Isopren/(Meth-)Acrylnitril-Copolymerisate mit Wasserstoff und die Verwendung der hydrierten Copolymerisate zur Herstellung von Vulkanisaten. Unter "selektiver Hydrierung" wird im Sinne der Erfindung die Hydrierung der olefinischen C = C-Doppelbindungen unter Erhalt der C≡N-Dreifachbindungen verstanden. "Unter Erhalt der C≡N-Dreifachbindungen" bedeutet in diesem Zusammenhang, daß weniger als 7, vorzugsweise weniger als 5, insbesondere weniger als 3 und speziell weniger als 1,5 % der ursprünglich vorhandenen Nitrilgruppen des polymeren Ausgangsprodukts hydriert werden.

Durch selektive Hydrierung von Nitrilkautschuk (Butadien/Acrylnitril-Copolymerisat;nachfolgend "NBR") zugänglicher hydrierter Nitrilkautschuk ("HNBR") zeichnet sich bekanntlich durch hohe Reißfestigkeit, geringen Abrieb, gute Ölbeständigkeit und bemerkenswerte Stabilität gegen oxidative Einflüsse aus. Der Druckverformungsrest bei niedriger Temperatur wird jedoch nicht allen Bedürfnissen gerecht.

Überraschenderweise wurde nun gefunden, daß Isoprenmodifizierter NBR ein Hydrierungsprodukt ergibt, das die vom HNBR bekannten wünschenswerten Eigenschaften mit einem verbesserten Druckverformungsrest bei niedriger Temperatur (jeweils bei gleichem Hydriergrad verglichen) vereinigt. Die nun erreichbaren Druckverformungsreste bei niedriger Temperatur waren bislang nur durch HNBR mit höherem C = C-Doppelbindungsgehalt erreichbar - also unter Einbußen an Beständigkeit, z.B. gegen oxidativen Angriff und gegen aggressive Medien, wie z.B. Schwefelwasserstoff und Amine.

Gegenstand der Erfindung ist also ein Verfahren zur selektiven Hydrierung von Butadien/Isopren/Acrylnitril-Copolymerisaten mit Gehalten an copolymerisiertem Isopren von 3,5 bis 22 Gew.-% und Gehalten an copolymerisiertem Acrylnitril von 18 bis 50 Gew.-%, wobei das Acrylnitril ganz oder teilweise durch die äquimolare Menge Methacrylnitril ersetzt sein kann, in organischem Lösungsmittel mit Wasserstoff unter 1 bis 350, vorzugsweise 5 bis 250, insbesondere 10 bis 200, bar Wasserstoffdruck und Temperaturen von 20 bis 250, vorzugsweise 80 bis 200, insbesondere 100 bis 180 und speziell 120 bis 160, °C in Gegenwart von 2 bis 3000, vorzugsweise 3 bis 1000, insbesondere 4 bis 400, ganz besonders bevorzugt 5 bis 300, ppm Metall oder Metallverbindung als Hydrierkatalysator (berechnet als Metall und bezogen auf Copolymerisat) bis zu einem Hydriergrad von mindestens 85 %, bezogen auf C = C-Doppelbindungen des Copolymerisats.

Weiterer Gegenstand der Erfindung sind selektiv hydrierte Butadien/Isopren/Acrylnitril-Copolymerisate mit Hydriergraden, bezogen auf die C = C-Doppelbindungen des Copolymerisats, von mindestens 85 %, hergestellt durch Hydrierung von Copolymerisaten mit Gehalten an copolymerisiertem Isopren von 3,5 bis 22 Gew.-% und Gehalten an copolymerisiertem Acrylnitril von 18 bis 50 Gew.-%, wobei das Acrylnitril ganz oder teilweise durch die äquimolare Menge Methacrylnitril ersetzt sein kann.

Weiterer Gegenstand der Erfindung ist schließlich die Verwendung der hydrierten Copolymerisate zur Herstellung von Vulkanisaten.

Die erfindungsgemäßen hydrierten Copolymerisate weisen besonders gute Eigenschaften auf, wenn die nachfolgend beschriebene Korrelation zwischen den Gehalten an copolymerisiertem Isopren und copolymerisiertem Acrylnitril im Ausgangsmaterial (vor der Hydrierung) erfüllt ist:

| Gehalt an copolymerisiertem | |
|---|---|
| Acrylnitril (Gew`-%) | Isopren (Gew.-%) |
| 18 - 23 | max, 22, vorzugsweise 9-18, insbesondere 10-17 |
| 23 - 29 | max, 17, vorzugsweise 6-15, insbesondere 8-14 |
| 29 - 35 | maximal 15, vorzugsweise 3,5-13, insbesondere 6-12 |
| 35 - 41 | maximal 12, vorzugsweise 3,5-11, insbesondere 5-9 |
| 41 - 48 | maximal 18, vorzugsweise 3,5-16, insbesondere 5-15 |

Eine optimale Eigenschaftskombination der hydrierten Copolymerisate bezüglich Druckverformungsrest in der Kälte und Beständigkeit gegen oxidativen Angriff und gegen aggressive Medien erhält man bei der Hydrierung von Copolymerisaten, deren Gehalte an copolymerisiertem Isopren und Acrylnitril durch die Kurven A (Obergrenze) und B (Untergrenze) der Fig. 1 begrenzt werden. (Für Methacrylnitril gelten äquimolare Verhältnisse).

Verfahren zur Hydrierung von NBR sind bekannt. Sie lassen sich auch zur Herstellung der erfindungsgemäßen Hydrierungsprodukte einsetzen. Man verwendet im allgemeinen als Katalysatoren Rhodium oder Ruthenium, aber auch Platin, Iridium, Palladium, Rhenium, Kobalt oder Kupfer in Form der Metalle, vorzugsweise aber in Form von Metallverbindungen; vgl. z.B. US-PS 3 700 637, DE-PS 2 539 132, EP-PS

134 023, DE-OS 35 41 689, 35 40 918, EP-A 298 386, DE-OS 35 29 252, DE-OS 34 33 392, US-PS 4 464 515 und 4 503 196.

Für die homogene Hydrierung werden nachfolgend geeignete Katalysatoren und Lösungsmittel beschrieben.

Als Katalysatoren bevorzugte Rhodiumverbindungen entsprechen den Formeln

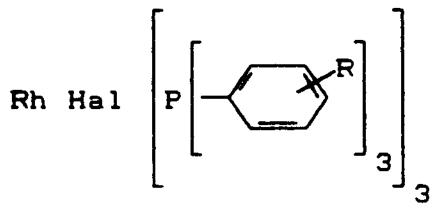 (I)

oder

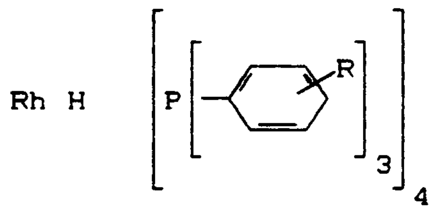 (II)

worin

Hal ein Halogen aus der Reihe Chlor, Brom, Iod und

R Wasserstoff, $C_1$-$C_4$-Alkyl (wie z.B. Methyl, Iso-propyl), $C_1$-$C_4$-Alkoxy (wie z.B. Methoxy) oder Halogen aus der Reihe Chlor, Brom, Iod

bedeuten.

Bevorzugte Rutheniumverbindungen entsprechen der Formel

$RuX_{2y} [(L^1)_n (L^2)_{5-z}]$ (III)

worin

X Wasserstoff, Halogen, $SnCl_3$,

$L^1$ Wasserstoff, Halogen, $(R^6\text{-COO})_n$ und Cyclopentadienyl der Formel

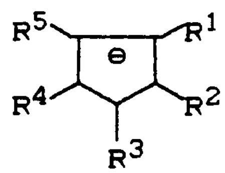 (IV)

in der $R^1$ bis $R^5$ unabhängig voneinander für Wasserstoff, Methyl, Ethyl oder Phenyl stehen, wobei auch benachbarte Substituenten gemeinsam einen Kohlenwasserstoffrest derart bilden können, daß $L^1$ ein Indenyl- oder Fluorenylsystem ist,

$L^2$ ein Phosphan, Bisphosphan oder Arsan und

y Null, 0,5 oder 1,

n 1 oder 2,

z eine ganze Zahl von 1 bis 4,

$R^6$ Alkyl, Cycloalkyl, Aryl oder Aralkyl mit 1 bis 20 C-Atomen

bedeuten.

Beispiele für $L^1$-Liganden vom Typ Cyclopentadienyl umfassen Cyclopentadienyl, Pentamethylcyclopentadienyl, Ethyltetramethylcyclopentadienyl, Pentaphenylcyclopentadienyl, Dimethyltriphenylcyclopentadienyl, Indenyl und Fluorenyl. Die Benzoringe in den $L^1$-Liganden vom Indenyl- und Fluorenyl-Typ können

durch Alkylreste mit 1 bis 6 C-Atomen, insbesondere Methyl, Ethyl und Isopropyl, Alkoxyreste mit 1 bis 4 C-Atomen, insbesondere Methoxy und Ethoxy, Arylreste, insbesondere Phenyl, und Halogene, insbesondere Fluor und Chlor, substituiert sein. Bevorzugte $L^1$-Liganden vom Typ Cyclopentadienyl sind die jeweils unsubsituierten Reste Cyclopentadienyl, Indenyl und Fluorenyl.

Im Liganden $L^1$ vom Typ ($R^6$ • COO)$_n$ umfaßt $R^6$ beispielsweise geradkettige oder verzweigte, gesättigte Kohlenwasserstoffreste mit 1 bis 20, bevorzugt 1 bis 12, insbesondere 1 bis 6 C-Atomen, cyclische, gesättigte Kohlenwasserstoffreste mit 5 bis 12, bevorzugt 5 bis 7 C-Atomen, aromatische Kohlenwasserstoffreste aus der Benzolreihe mit 6 bis 18, bevorzugt 6 bis 10 C-Atomen, Aryl-substituierte Alkylreste, die im aliphatischen Teil aus einem geradkettigen oder verzweigten Kohlenwasserstoffrest mit 1 bis 6 C-Atomen und im aromatischen Teil aus einem Rest der Benzolreihe, vorzugsweise Phenyl, bestehen.

Die vorstehend erläuterten Reste $R^6$ können gegebenenfalls durch Hydroxy, $C_1$-$C_6$-Alkoxy, $C_1$-$C_6$-Carbalkoxy, Fluor, Chlor oder Di-$C_1$-$C_4$-alkylamino substituiert sein, die Cycloalkyl-, Aryl- und Aralkylreste darüber hinaus durch $C_1$- bis $C_6$-Alkyl. Alkyl-, Cycloalkyl- und Aralkylgruppen können Ketogruppen enthalten.

Beispiele für den Rest $R^6$ sind Methyl, Ethyl, Propyl, iso-Propyl, tert.-Butyl, Cyclohexyl, Phenyl, Benzyl und Trifluormethyl. Bevorzugte Reste $R^6$ sind Methyl, Ethyl und tert.-Butyl.

Bevorzugte $L^2$-Liganden sind Phosphane und Arsane der Formeln

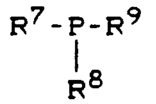

und

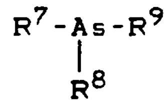

(V) (VI)

in denen $R^7$, $R^8$ und $R^9$ unabhängig voneinander der Bedeutung von $R^6$ entsprechen.

Bevorzugte $L^2$-Liganden der Formeln (V) und (VI) sind Triphenylphosphan, Diethylphenylphosphan, Tritolylphosphan, Trinaphthylphosphan, Diphenylmethylphosphan, Diphenylbutylphosphan, Tris-(p-carbmethoxyphenyl)-phosphan, Tris-(p-cyanophenyl)-phosphan, Tributylphosphan, Tris-(trimethoxyphenyl)-phosphane, Bis-(trimethylphenyl)-phenylphosphane, Bis-(trimethoxyphenyl)-phenylphosphane, Trimethylphenyl-diphenylphosphane, Trimethoxyphenyldiphenylphosphane, Tris-(dimethylphenyl)-phenylphosphane, Tris-(dimethoxyphenyl)-phosphane, Bis(dimethylphenyl)-phenylphosphane, Bis-(dimethoxyphenyl)-phenylphosphane, Dimethylphenyldiphenylphosphane, Dimethoxyphenyldiphenylphosphane, Triphenylarsan, Ditolylphenylarsan, Tris-(4-ethoxyphenyl)-arsan, Diphenylcyclohexylarsan, Dibutylphenylarsan und Diethylphenylarsan. Besonders bevorzugt sind Triarylphosphane, insbesondere Triphenylphosphan.

Weitere Beispiele für $L^2$-Liganden sind Bisphosphane der Formel

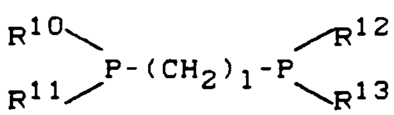

(VII)

in der 1 für eine ganze Zahl von 1 bis 10 steht und die Reste $R^{10}$, $R^{11}$, $R^{12}$, $R^{13}$ unabhängig voneinander die Bedeutung von $R^6$ haben.

Beispiele für Bisphosphane sind 1,2-Bis-diphenylphosphanoethan, 1,2-Bis-dianisylphosphanoethan, 1,3-Bis-diphenylphosphanopropan und 1,4-Bis-diphenylphosphanobutan. Bevorzugt ist 1,2-Bis-diphenylphosphanoethan, insbesondere 1,3-Bis-diphenylphosphanopropan und 1,4-Bis-diphenylphosphanobutan.

Die Definition der Verbindungen (III) soll auch solche Verbindungen umfassen, deren $L^1$ und $L^2$ durch eine oder mehrere kovalente Bindungen untereinander verbunden sind. Beispiele für derartige Verbindungen sind Verbindungen der Formel

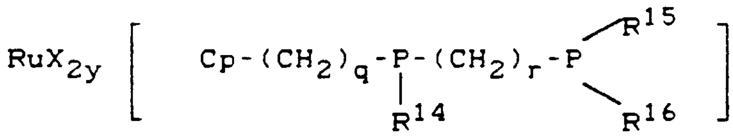 (VIII)

Cp; Cyclopentadienyl

worin q und r unabhängig voneinander eine ganze Zahl von 1 bis 6 bedeuten und die Reste $R^{14}$ bis $R^{16}$ unabhängig voneinander die Bedeutung von $R^6$ haben.

Beispiele für Liganden in eckiger Klammer in Formel (VIII) sind 1,4-Diphospha-6-cyclopentadienyl-1,1,4-triphenylhexan, bevorzugt 1,5- Diphospha-7-cyclopentadienyl-1,1,5-triphenylheptan und insbesondere 1,6-Diphospha-8-cyclopentadienyl-1,1,6- triphenyloctan`

Besonders bevorzugte Ruthenium-Komplexkatalysatoren der Formel (III) sind:

$RuCl_2\ (PPh_3)_3$
$RuHCl\ (PPh_3)_3$
$RuH_2\ (PPh_3)_4$
$RuH_4\ (PPh_3)_3$
$RuH\ (CH_3COO)\ (PPh_3)_3$
$RuH\ (C_2H_5COO)\ (PPh_3)_3$
$RuH\ [(CH_3)_3C \cdot COO]\ (PPh_3)_3$
$Ru\ (CH_3\ COO)_2\ (PPh_3)_2$
$RuCl\ (Cp)\ (PPh_3)_2$
$RuH\ (Cp)\ (PPh_3)_2$
$Ru\ (SnCl_3)\ (Cp)\ (PPh_3)_2$
$RuCl\ (\eta^5\text{-}C_9H_7)\ (PPh_3)_2$
$RuH\ (\eta^5\text{-}C_9H_7)\ (PPh_3)_2$
$Ru\ (SnCl_3)\ (\eta^5\text{-}C_9H_7)\ (PPh_3)_2$
$RuCl\ (\eta^5\text{-}C_{13}H_9)\ (PPh_3)_2$
$RuH\ (\eta^5\text{-}C_{13}H_9)\ (PPh_3)_2$
$Ru\ (SnCl_3)\ (\eta^5\text{-}C_{13}H_9)\ (PPh_3)_2$
$RuCl\ (\eta^5\text{-}C_9H_7)$ (dppe)

Dabei bedeuten "Ph" Phenyl, "Cp" Cyclopentadienyl und "dppe" 1,2-Bis-diphenylphosphanoethan.

Bevorzugt werden im für die Hydrierung verwendeten organischen Lösungsmittel lösliche Katalysatoren verwendet. Als "löslich" im Sinne der Erfindung werden Katalysatoren dann bezeichnet, wenn sich bei 20 °C von 3,4 g Katalysator in 2 l des betreffenden Lösungsmittels mehr als 50 Gew.-%, bevorzugt mehr als 65 Gew.-%, insbesondere mehr als 80 Gew.-% lösen.

Bevorzugte organische Lösungsmittel - insbesondere bei der Verwendung von Rhodiumverbindungen - umfassen chlorierte aromatische Kohlenwasserstoffe, wie z.B. Chlorbenzol und Dichlorbenzole. Bevorzugte organische Lösungsmittel - insbesondere bei der Verwendung von Rutheniumverbindungen - umfassen $C_3$-$C_6$-Ketone und insbesondere Mischungen aus

a) $C_3$-$C_6$-Keton und

b) einwertigem, sekundärem oder tertiärem $C_3$-$C_6$-Alkohol, wobei der Anteil b) an der Mischung 2 bis 60, vorzugsweise 5 bis 50, insbesondere 7 bis 40, Gew.-% beträgt.

Bevorzugte $C_3$-$C_6$-Ketone sind beispielsweise Aceton, Butanon, Pentanone, Cyclopentanon und Cyclohexanon und deren Mischungen. Butanon und insbesondere Aceton sind bevorzugt.

Bevorzugte $C_3$-$C_6$-Alkohole sind beispielsweise 2-Propanol, 2-Butanol, 2-Methyl-2-propanol, 2- und 3-Pentanol, 3-Methyl-2-butanol, 2-Methyl-2-butanol, 2-, 3- und 4-Hexanol, 4-Methyl-2-pentanol. Bevorzugter Alkohol ist 2-Methyl-2-propanol, insbesondere 2-Butanol, ganz besonders bevorzugt ist 2-Propanol.

Die bevorzugten erfindungsgemäßen hydrierten Butadien/ Isopren/(Meth-)Acrylnitril-Copolymerisate sind Kautschuke mit Glasübergangstemperaturen unter 0 °C, vorzugsweise unter -10 °C, z.B. mechanischdynamisch bei 11 Hz mit erzwungenen Schwingungen gemessen (Vibron-Viscoelastometer). Sie besitzen in der Regel Mooney-Viskositäten (DIN 53 523) von 10 bis 150, vorzugsweise von 20 bis 100, insbesondere von 30 bis 90 ML (1+4) 100 °C. Die Hydriergrade liegen bei mindestens 85 %, vorzugsweise zwischen 90 und 99,7 %, insbesondere zwischen 94 und 99,7 %. Der Hydriergrad kann NMR- und IR-spektroskopisch bestimmt werden.

Nach der Hydrierung können die Reaktionsprodukte mit Hilfe üblicher Methoden aus der Lösung abgetrennt werden. Übliche Methoden umfassen z.B. Eindampfen (gegebenenfalls unter vermindertem

Druck), Einblasen von Wasserdampf und Zugabe eines Fällungsmittels (Nichtlösungsmittels). Zur Entfernung von Restlösungsmittel oder Wasser kann sich eine Trocknung anschließen.

Die erfindungsgemäß hydrierten Copolymerisate sind in Lösungsmitteln wie z.B. Aceton, Butanon, Tetrahydrofuran, Dichlormethan, Trichlormethan und Chlorbenzol im allgemeinen löslich.

Für die meisten Anwendungen setzt man die erfindungsgemäßen hydrierten Copolymerisate in vulkanisierter Form ein. Die Vulkanisation kann - gegebenenfalls nach Zugabe von Füllstoffen, Stabilisatoren etc. - z.B. durch energiereiche Strahlung oder durch Vernetzung mit Schwefel oder Schwefelspendern, mit Peroxiden und gegebenenfalls mit mehrfunktionellen, vernetzend wirkenden Verbindungen (wie z.B. Triallylcyanurat, Triallylisocyanurat, Bismaleinimiden, Divinylbenzol, Methacrylsäureester mehrwertiger Alkohole u.a.) erfolgen. Die Schwefelvulkanisation wird bevorzugt, wobei hier erfindungsgemäß hydrierte Copolymerisate mit Hydriergraden von vorzugsweise 94 bis 97 % verwendet werden sollten.

Ausführliche Beschreibungen von Schwefelvulkanisiersystemen finden sich bei W. Hofmann, "Vulkanisation und Vulkanisationshilfsmittel", Verlag Berliner Union GmbH, Stuttgart 1965 und bei Alliger und Sjothun, "Vulcanization of Elastomers", Reinhold Pub. Corp. New York 1964. Geeignete Schwefelspender umfassen Thiurampolysulfide wie z.B. Dipentamethylenthiuram-tetra- und -hexasulfid, Tetramethylthiuram-disulfid; Amindisulfide wie z.B. Dimorpholyldisulfid; Natriumpolysulfide und Thioplaste.

Bevorzugte Schwefelvulkanisiersysteme enthalten

a) Schwefel oder Schwefelspender,

b) gegebenenfalls Vulkanisationsbeschleuniger und

c) gegebenenfalls einen oder mehrere Aktivatoren.

Als Menge a) verwendet man in der Regel 0,2 bis 3,0 Gew.-% Schwefel (im Falle von Schwefelspender: berechnet als freiwerdender Schwefel), bezogen auf Copolymerisat.

Die Vulkanisationsbeschleuniger b) verwendet man im allgemeinen in Mengen von 1 bis 3,5 Gew.-%, bezogen auf Copolymerisat. Bevorzugte Vulkanisationsbeschleuniger b) umfassen Thiazolbeschleuniger wie
2-Mercaptobenzothiazol (MBT),
Dibenzothiazyl-disulfid (MBTS),
Benzothiazyl-2-cyclohexylsulfenamid (CBS),
Benzothiazyl-2-tert.-butylsulfenamid (TBBS),
N-Morpholinothio-2-benzothiazol (MBS),
Benzothiazyl-2-diisopropylsulfenamid (DIBS),
Benzothiazyl-2-tert.-amylsulfenamid (TABS),
Benzothiazyl-dicyclohexylsulfenamid (DCBS) und
Morpholino-thiocarbonyl-sulfenmorpholid (OTOS).

Weitere bevorzugte Vulkanisationsbeschleuniger b) umfassen Diphenylguanidin (DPG) und Di-o-tolylguanidin (DOTG); Thiurame wie Thiurammono- und -disulfide; und Dithiocarbamate, sowie Thiophosphate und deren Derivate und Salze, wie z.B. ihre Zinksalze.

Die bedeutendsten Aktivatoren c) sind die Metalloxide, insbesondere Zinkoxid. In einzelnen Fällen wird auch Magnesiumoxid oder Calciumhydroxid verwendet.

Für die Peroxidvulkanisation bevorzugte Peroxide umfassen
Dialkylperoxide,
Ketalperoxide,
Aralkylperoxide,
Peroxidester,
Peroxidether; wie z.B.
z.B. Di-tert.-butylperoxid,
Bis-(tert.-butylperoxiisopropyl)-benzol,
Dicumylperoxid,
2,5-Dimethyl-2,5-di(tert.-butylperoxy)-hexan,
2,5-Dimethyl-2,5-di(tert.-butylperoxy)-hexen-(3),
1,1-Bis(tert.-butylperoxy)-3,3,5-trimethyl-cyclohexan,
Benzoylperoxid,
tert.-Butylcumylperoxid und
tert.-Butylperbenzoat.

Die Peroxidmengen liegen vorzugsweise im Bereich von 4 bis 8 Gew.-%, bezogen auf Copolymerisat.

Die Vulkanisation kann bei Temperaturen von 100 bis 200 °C, vorzugsweise 130 bis 180 °C, gegebenenfalls unter einem Druck von 10 bis 200 bar, erfolgen. Im Anschluß an die Vulkanisation können die Vulkanisate durch Lagerung bei höherer Temperatur getempert werden.

"Vulkanisiert" im Sinne der Erfindung bedeutet, daß bei je 10-stündiger Extraktion im Soxhlet-Aufsatz

mit Tetrahydrofuran, gefolgt von Chlorbenzol, als Extraktionsmittel weniger als 10, vorzugsweise weniger als 5 Gew.-% Copolymerisat, bezogen auf bei der Extraktion eingesetztes Copolymerisat, extrahierbar ist. Dabei bedeutet der Ausdruck "Copolymerisat" reines Copolymerisat, d.h. er schließt z.B. eventuell vorhandene Anteile von Strecköl (extender oil) nicht ein.

Die erfindungsgemäßen hydrierten Copolymerisate eignen sich besonders zur Herstellung von Vulkanisaten, die dynamisch hoch belastbar sein müssen: Sie können als Dichtungen, Schläuche, Membranen, Antriebsriemen, Manschetten, Kabelmäntel etc. Anwendung finden.

Die in den nachfolgenden Beispielen angegebenen Teile sind Gewichtsteile; Prozentangeben beziehen sich auf das Gewicht.

## Beispiele

### Mischungsherstellung

Die Mischungen wurden mit folgender Rezeptur in einem Laborkneter, der auf 50 °C aufgewärmt worden war, hergestellt:

| | Gew.-Teile |
|---|---|
| hydriertes Copolymerisat | 100 |
| Schwefel | 0,5 |
| Stearinsäure | 1 |
| Zinkoxid1) | 2 |
| Magnesiumoxid2) | 2 |
| ®Vulkanox OCD3) | 1 |
| ®Vulkanox ZMB-24) | 0,4 |
| Ruß N 550 | 45 |
| ®Vulkacit Thiuram5) | 2 |
| ®Vulkacit CZ6) | 0,5 |

1) ®Zinkoxyd aktiv der Fa. Bayer AG
2) ®Maglite DE der Fa. Merck & Co. Inc., USA
3) Octyliertes Diphenylamin der Fa. Bayer AG
4) Zinksalz des 2-Mercapto-benzimidazols der Fa. Bayer AG
5) Tetramethylthiuramdisulfid der Fa. Bayer AG
6) Benzothiazyl-2-cyclohexylsulfenamid der Fa. Bayer AG

Das hydrierte Copolymerisat wurde vorgelegt, nachdem vorher der Schwefel auf einer Laborwalze eingearbeitet worden war (Walzentemperatur 50 °C). Nach einer Minute wurden alle Bestandteile, außer Vulkacit Thiuram und Vulkacit CZ, zugegeben. Nach weiteren 3 Minuten wurde gekühlt, so daß die Massetemperatur ca. 100 °C betrug. Jetzt wurde das Beschleunigersystem eingemischt und nach 1,5 Minuten ausgestoßen.

Die Vulkanisation erfolgte bei 160 °C/20 Minuten in einer Presse. Die Bestimmung des Druckverformungsrestes erfolgte an einem 70 Stunden bei -10 °C gelagerten Probekörper I nach DIN 53 517.

### Beispiele 1 bis 3

Folgende Butadien/Isopren/Acrylnitril-Copolymerisate wurden 9,3 gew.-%ig in Chlorbenzol gelöst und unter einem Wasserstoffdruck von 150 bar bei 120 °C in Gegenwart von 167 ppm Rh in Form von $RhCl[P(C_6H_5)_3]_3$, bezogen auf Copolymerisat, hydriert. Nach Entfernung des Lösungsmittels blieben die hydrierten Copolymerisate zurück.

### Ausgangsprodukte für die Hydrierung

| Beispiel | copolymerisiertes Isopren (Gew.-%) | copolymerisiertes Acrylnitril (Gew.-%) |
|---|---|---|
| 1 | 4,1 | 34,1 |
| 2 | 7,9 | 33,3 |
| 3 | 12,0 | 33,5 |

In der nachfolgenden Tabelle sind die Hydrierungsergebnisse und die Druckverformungsreste der hydrierten Copolymerisate aufgelistet.

Druckverformungsreste in der Kälte in Abhängigkeit vom Isoprengehalt der Ausgangspolymerisate bei vergleichbaren Hydriergraden

| Beispiel | Isoprengehalt des Ausgangs-NBR (Gew.-%) | Hydriergrad (%) (gesamt) | Hydriergrad (%) (Butadien) | Hydriergrad (%) (Isopren) | Druckverformungsrest (%) (70 h bei $-10^0$C gelagert, gemessen nach DIN 53 517, Probekörper I) |
|---|---|---|---|---|---|
| 1 | 4,1 | 98,6 | 99,2 | 86,3 | 41,8 |
| 2 | 7,9 | 98,3 | 99,5 | 86,6 | 22,3 |
| 3 | 12,0 | 97,1 | 99,6 | 82,9 | 21,7 |

## Patentansprüche

1. Verfahren zur selektiven Hydrierung von Butadien/Isopren/Acrylnitril-Copolymerisaten mit Gehalten an copolymerisiertem Isopren von 3,5 bis 22 Gew.-% und Gehalten an copolymerisiertem Acrylnitril von

18 bis 50 Gew.-%, wobei das Acrylnitril ganz oder teilweise durch die äquimolare Menge Methacrylnitril ersetzt sein kann, in organischem Lösungsmittel mit Wasserstoff unter 1 bis 350 bar Wasserstoffdruck und Temperaturen von 20 bis 250 °C in Gegenwart von 2 bis 3000 ppm Metall oder Metallverbindung als Hydrierkatalysator (berechnet als Metall und bezogen auf Copolymerisat) bis zu einem Hydriergrad von mindestens 85%, bezogen auf C = C-Doppelbindungen des Copolymerisats.

**2.** Verfahren nach Anspruch 1, wonach unter einem Wasserstoffdruck von 5 bis 250 bar hydriert wird.

**3.** Verfahren nach Anspruch 1, wonach unter einem Wasserstoffdruck von 10 bis 200 bar hydriert wird.

**4.** Verfahren nach Anspruch 1, wonach bei einer Temperatur von 80 bis 200 °C hydriert wird.

**5.** Verfahren nach Anspruch 1, wonach bei einer Temperatur von 100 bis 180 °C hydriert wird.

**6.** Verfahren nach Anspruch 1, wonach bei einer Temperatur von 120 bis 160 °C hydriert wird.

**7.** Verfahren nach Anspruch 1, wonach in Gegenwart von 3 bis 1000 ppm Katalysator, berechnet als Metall und bezogen auf Copolymer, hydriert wird.

**8.** Selektiv hydrierte Butadien/Isopren/Acrylnitril-Co-polymerisate mit Hydriergraden, bezogen auf die C = C-Doppelbindungen des Copolymerisats, von mindestens 85%, hergestellt durch Hydrierung von Copolymerisaten mit Gehalten an copolymerisiertem Isopren von 3,5 bis 22 Gew.-% und Gehalten an copolymerisiertem Acrylnitril von 18 bis 50 Gew.-%, wobei das Acrylnitril ganz oder teilweise durch die äquimolare Menge Methacrylnitril ersetzt sein kann.

**9.** Copolymerisate nach Anspruch 8, deren Gehalte an copolymerisiertem Isopren und Acrylnitril durch die Kurven A und B der Fig. 1 begrenzt werden und derartige Copolymerisate, deren Anteile an copolymerisiertem Acrylnitril ganz oder teilweise durch äquimolare Mengen copolymerisiertes Methacrylnitril ersetzt sind.

**10.** Verwendung der Copolymerisate nach Ansprüchen 8 und 9 zur Herstellung von Vulkanisaten.

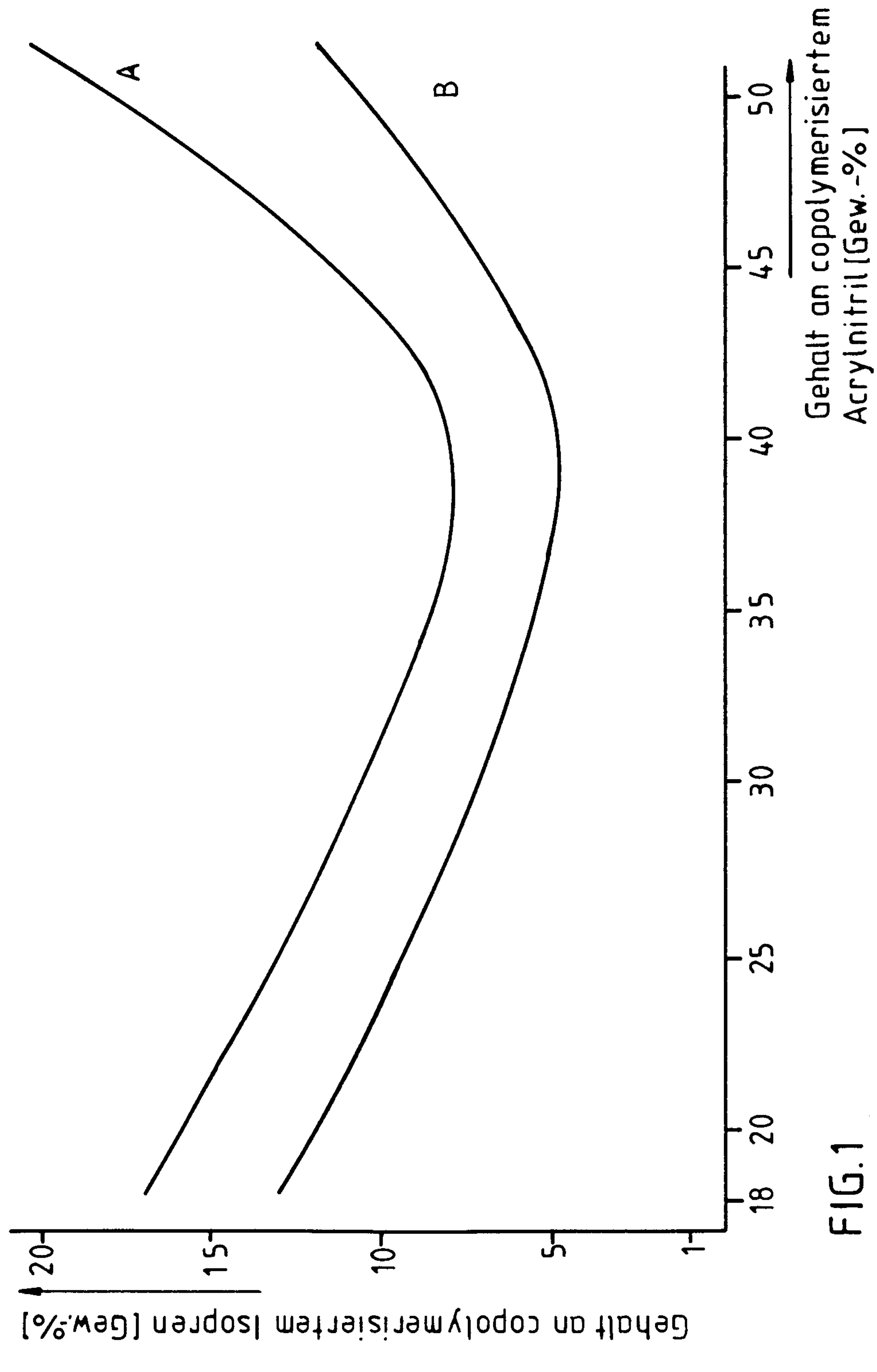
A
B
Gehalt an copolymerisiertem Isopren [Gew.%]
20
15
10
5
1
18
20
25
30
35
40
45
50
Gehalt an copolymerisiertem Acrylnitril [Gew.-%]

FIG.1

Europäisches Patentamt

# EUROPÄISCHER RECHERCHENBERICHT

Nummer der Anmeldung

**EP 91 11 3018**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 359 269 (POLYSAR LIMITED)<br>* Seite 8, Zeile 46 - Seite 8, Zeile 51 * * * Seite 3, Zeile 17 - Seite 3, Zeile 20 * * | 1-10 | C 08 C 19/02 |
| A | EP-A-0 224 139 (BAYER AG)<br>* Ansprüche 1,5,7 * * | 1-10 | |

| RECHERCHIERTE SACHGEBIETE (Int. Cl.5) |
|---|
| C 08 C |

Der vorliegende Recherchenbericht wurde für alle Patentansprüche erstellt

| Recherchenort | Abschlußdatum der Recherche | Prüfer |
|---|---|---|
| Den Haag | 18 November 91 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument